# NEW EUROPEAN PATENT SPECIFICATION

(11) **EP 0 355 797 B2**
(45) Date of publication and mention of the opposition decision: **21.03.2001**
(45) Mention of the grant of the patent: 15.03.1995
(21) Application number: 89115476.7
(22) Date of filing: 22.08.1989
(51) Int. Cl.: H04Q 11/04, H04L 12/56

(54) **Signalling apparatus for use in an ATM switching system**
Signalisierungsgerät zur Verwendung in einem ATM-Vermittlungssystem
Appareil de signalisation pour utilisation dans un système de commutation ATM

(30) Priority: 26.08.1988 JP 21071888
(43) Date of publication of application: 28.02.1990
(73) Proprietor: Hitachi, Ltd., Chiyoda-ku, Tokyo (JP)
(72) Inventor: Kunimoto, Masao, Midori-ku Yokohama (JP); Kashio, Jiro, Asao-ku Kawasaki-shi (JP); Mori, Makoto, Totsuka-ku Yokohama (JP); Gohara, Shinobu, Totsuka-ku Yokohama (JP)
(74) Representative: Strehl Schübel-Hopf & Partner

(56) References cited:
- EP-A- 0 183 592
- WO-A-84/00265
- GB-A- 2 184 327
- US-A- 4 611 322
- ICC-87, Session 22, Paper 2, vol. 2, 07 June 1987, Seattle, US pages 1 - 5; J.P.Coudreuse et al: "PRELUDE: An asynchronous time-division switched network"

## Description

The present invention relates generally to a broadband communication system, and more particularly to a signalling apparatus in an ATM (Asynchronous Transfer Mode) switching system.

An ISDN (Integrated Services Digital Network) is provided with two types of channels, namely, information channels (or B or H channels) for transfer of user's information, and signalling channels (or "D channels") for transfer of control signals for setting channels.

A layered data processing scheme utilizes a three layer structure. In layer 2 functions commonly accomplished by LAPD (Link Access Procedure on the D-channel) devices are accomplished. In layer 3, call control in accordance with the 1.451 standard is accomplished.

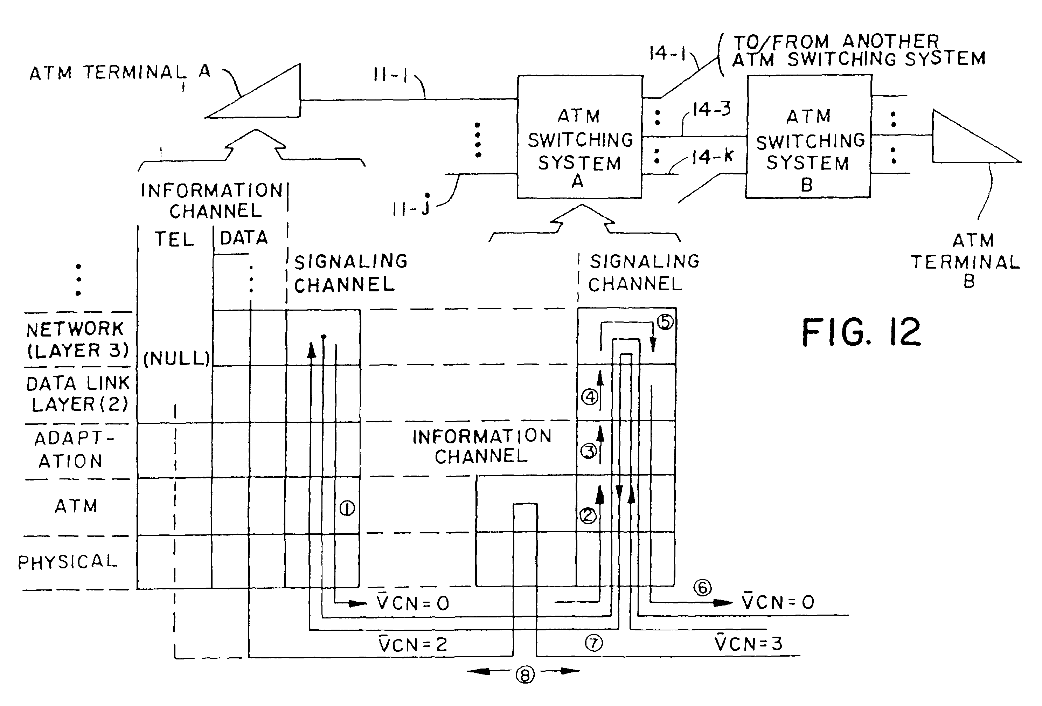

In an earlier method of processing signalling channels in an ISDN switching system, signalling channels from a plurality of subscriber lines are separated from information channels. Only the signalling channels are multiplexed and guided to a signalling processor. Thereafter, the processes of layer 2 (LAPD) and layer 3 (call control) are performed. See for example, Fig. 12 of "Signalling Processing in an I-Interface Switching System", IEICE (The Institute of Electronics Information and Communication Engineers) Technical Report SE 87-85, or Japanese Laid-Open Patent Application No. 131652/1987.

The International Telegraph and Telephone Consultative Committee ("CCITT") is now considering a "broadband ISDN" as the next generation ISDN. The broadband ISDN is an attempt to provide switching services at a line rate of, for example, 150 Mbit/s. CCITT Draft Recommendation 1.121 cites the ATM (Asynchronous Transfer Mode) as a favourable means for implementing the above-mentioned broadband ISDN.

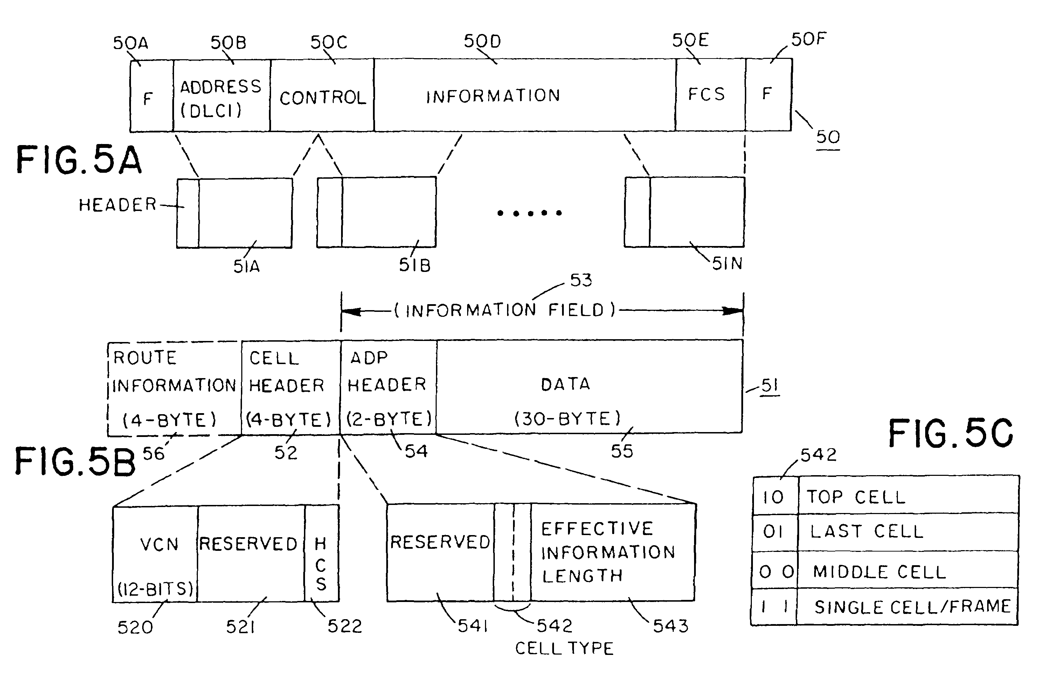

The ATM switching system is a system in which all data, including control signals and information, are transferred in fixed-length packets called "cells". For example, when a signalling frame 50 is to be transmitted from a subscriber's terminal, as shown in Fig. 5 A, the frame 50 is segmented into fixed length cells 51A- 51N, which cells are then transmitted through the subscriber line. An ADP processing unit 100 in the switching system will then reassemble the signal frame 50 from the cells 51A- 51N received thereby, and LAPD-LSI 101 performs layer 2 functions for a signalling channel (which is called "LAPD"). Signal-ling processor 40 processes functions of layer 3 for a signalling channel (which is called "call control"). When, on the other hand, a signal frame is to be transmitted from the switching system to a subscriber terminal, the switching system will perform such segmenting and the subscriber terminal will perform such a reassembly procedure.

The processes of segmenting/reassembling are determined to be functions of the "adaptation layer" in accordance with the CCITT Draft Recommendation 1.121. The processing unit of the adaptation layer, induding the segmenting/reassembling processes, is hereinafter called "ADP processing unit."

Examples for the application of the LAPD protocol in a switching system and Examples of an ATM switch are described in documents GB-A-2 184 327 and "PRELUDE, an asynchronous time-division switched network", J.P. Coudreuse et al., ICC-87 respectively.

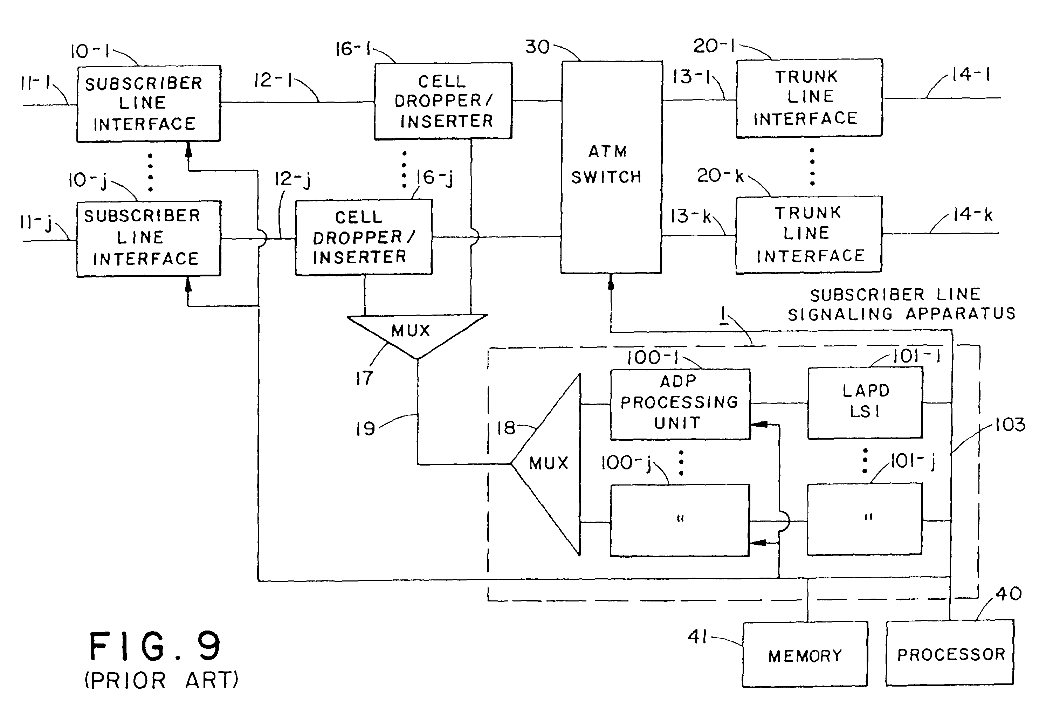

An arrangement of an assumed ATM switching system which is constructed in a similar manner to the above conventional ISDN switching systems, and the processing of signalling therein is described with reference to Fig. 9. In this figure, 11 (11- 1- 11-j) designates optical fibres having a transmission rate of, for example, about 150 Mbit/s; 10 (10-1 - 10-j) designates subscriber line interfaces which perform, for example, optical/electrical signal conversion; 30 designates an ATM switch for switching cells; 12 (12-1 -12-j) designates 8-bit buses.

Cell dropper/inserter circuits 16 (16-1 - 16-j) are inserted between the subscriber line interfaces 10 and the ATM switch 30. In receiving subsystems (from the subscriber line interfaces 10 to the ATM switch 30), only cells in the signalling channels are separated and extracted, while in transmission subsystems (from the ATM switch 30 to the subscriber line interfaces 10), signalling channel cells are Inserted. Cell data from the cell dropper/inserter 16 is multiplexed by a multiplexer/demultiplexer (MUX) 17, and connected to a subscriber line signalling unit 1 via a bus 19. The subscriber line signalling unit 1 comprises: a multiplexer/demultiplexer (MUX) 18, for multiplexing and demultiplexing cell data for each subscriber's line; the above-mentioned ADP processing units 100 (100-1 - 100-j); LAPD-LSI 101 (101-1 101-j), for processing layer 2 signalling channels; and a bus 103.

In accordance with the above-mentioned system, a drawback exists in that one cell dropper/inserter 16 is necessitated for each subscriber's line, and MUX 17 and buses for connecting them are further required, since only cells in the signalling channels are collected. Further, the MUX 18 and ADP processing units for corresponding subscriber's lines must be provided in the subscriber line signalling unit 1.

An arrangement in which the subscriber line signalling apparatus and subscriber terminals are interconnected by a switch is disclosed, for example, in JP-A-63-78637. Such a system does not, however, contemplate any adaptation process and circuitry, such as a scanning unit, for subscriber lines necessary to detect signal frames.

A packet switching system in which signalling packets are routed through the switch is disclosed in US 4 611 322.

### Summary of the Invention

A broadband communication system in accordance with the invention is defined by claim 1.

A method, in accordance with the invention, for communicating signalling channel data cells with a subscriber line signalling apparatus in a broadband communication system, is defined by claim 10.

According to the invention, signalling channel data cells are routed (i.e. collected and distributed) to a signalling apparatus using the ATM switch, and the signalling apparatus can perform an adaptation process commonly for a plurality of (subscriber) lines.

An advantage of the present invention is that the equipment requirements are minimised, because none of the cell dropper/inserters and cell multiplexer/demultiplexers of Fig. 9 is necessary. Also, since the adaptation process can be performed commonly, the amount of hardware necessary for the adaptation process can be reduced. Thus, the system of the invention provides reduced cost, smaller size, and increased reliability.

In accordance with one embodiment of the present invention, the signalling apparatus comprises a trunk line signalling apparatus working in concert with a subscriber line signalling apparatus.

### Brief Description of the Drawings

Fig. 1 is a system block diagram showing a first embodiment of the present invention;
Fig. 2 is a system block diagram showing a second embodiment of the present invention;
Fig. 3 is a block diagram showing a transmission subsystem in an ADP processing unit;
Fig. 4 is a block diagram showing a receiving subsystem in the ADP processing unit 100;
Figs. 5 A and 5 B are diagrams for explaining a frame and a cell format;
Fig. 6 is a diagram showing an exemplary arrangement of an ATM switching system applicable to Figs. 1, 2, 8, and 9;
Fig. 7 is a table illustrating the conversion table memory of Fig. 6;
Fig. 8 illustrates a third embodiment of the present invention employing a trunk line signalling processor;
Fig. 9 is a system block diagram to which a conventional method of construction for a signalling apparatus is applied;
Fig. 10 illustrates a fabrication scheme of the Fig. 3 subsystem;
Fig. 11 illustrates a fabrication scheme of the Fig. 4 subsystem; and
Fig. 12 illustrates an ATM switching network.

### Detailed Description of the Embodiments

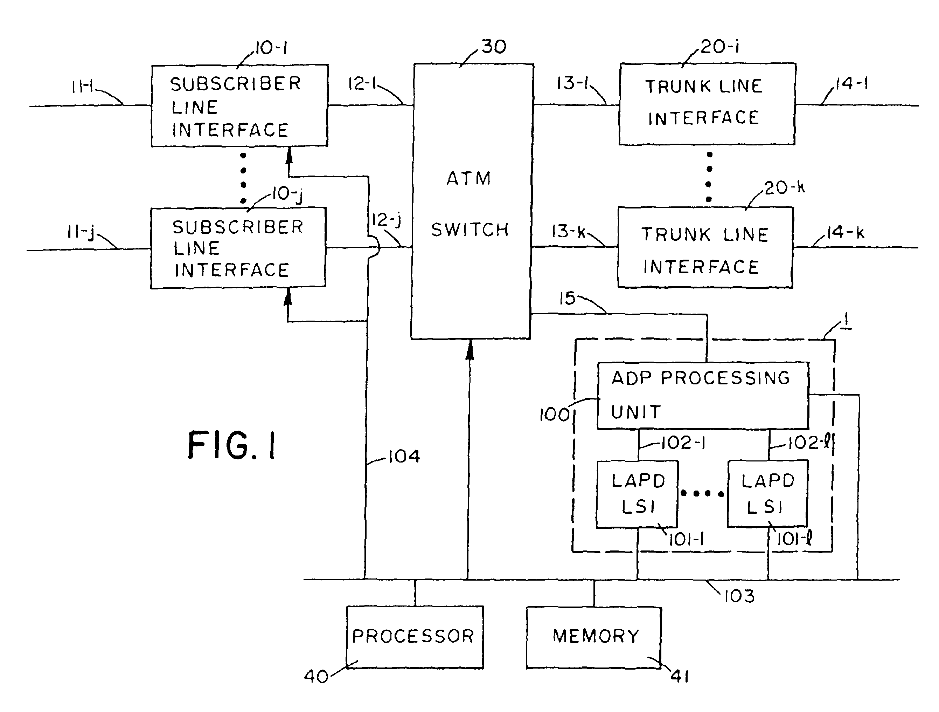

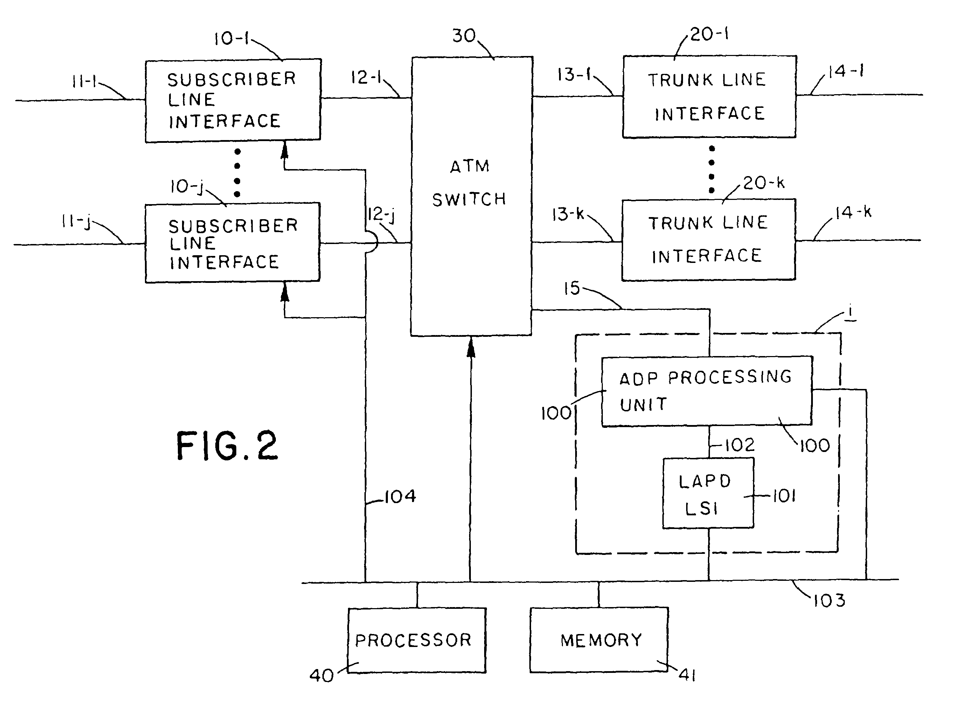

Turning now to the drawings, Figs. 1 and 2, disclose a first embodiment of the present invention in which a subscriber line signalling apparatus 1 includes an ADP processing unit 100 for performing an adaptation process, including segmentation of a communication frame and reassembly of received cells. LAPD-LSI's 101 (101-1 - 101-1) for performing layer 2 protocol processing of a signalling channel. This apparatus 1 connected, via a bus 15, to an ATM switch 30. Also, the subscriber line signalling apparatus 1 is connected, via a bus 103, to a processor 40 for performing, for example, the operation of layer 3 protocol processing of signalling channels, and controlling of the LAPD-LSI's and initializing of an ATM switch. Numeral 11 (11-1 - 11-k) designates optical fibres, or the like, having a transmission rate of, for example, about 150 Mbits/s. Numeral 14 (14-1 - 14-k) designates optical fibres having a transmission rate of, for example, about 150 Mbits/s or 600 Mbits/s. The components referenced by numerals 12 (12-1 - 12-j), 13 (13-1 - 13-k) and 15 are suitably formed of eight-bit wide buses. Subscriber line interfaces 10 and trunk line interfaces 20 suitably perform optical/electrical signal conversion, and add/delete a route information segment to and from individual cells, respectively.

Although the optical fibres 11, 14 and the buses 12 and 13 are illustrated as a single line in Fig. 1, each of these fibres and buses is fabricated from a pair of transmission and reception lines or buses.

Numeral 30 designates an ATM switch for switching fixed length cells, and may, for example, comprise a switch of the type described in "A Memory Switch Architecture for ATM Switching Network ",IEICE Technical Report IN88-38. Assuming that the numbers of input and output buses of the ATM switch are 32 and 32, respectively, j=32 and k=31 in the figures. If it is desired to have 32 input buses and 32 output buses for switching cells of information channels, then the ATM switch should be provided with 32 input buses and 33 or 34 output buses. One or two buses 15 should be exclusively used for signalling channels.

Although the embodiment of Fig. 1 has one LAPD-LSI for each subscriber line (j=l), the number of LAPD-LSI's may be reduced (j>I) or additional LAPD-LSI's may be provided (j<l) to provide against emergencies. Fig. 2 shows a system in which the process of layer 2 of signalling channels for a plurality of subscriber lines (11-1 - 11-j) is performed by a single LAPD-LSI 101.

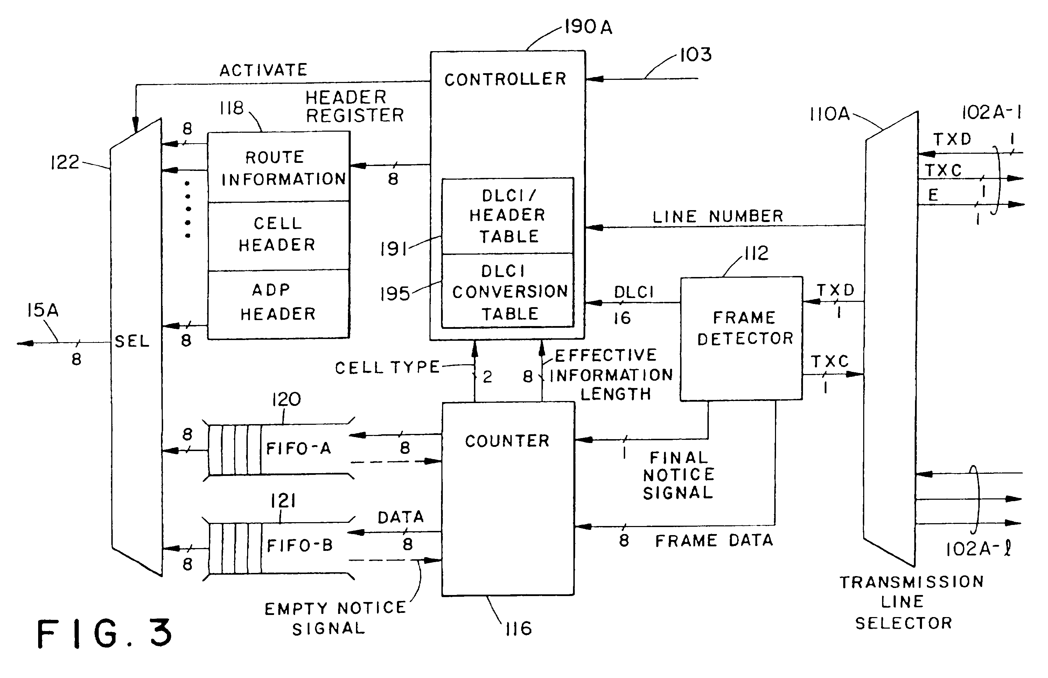

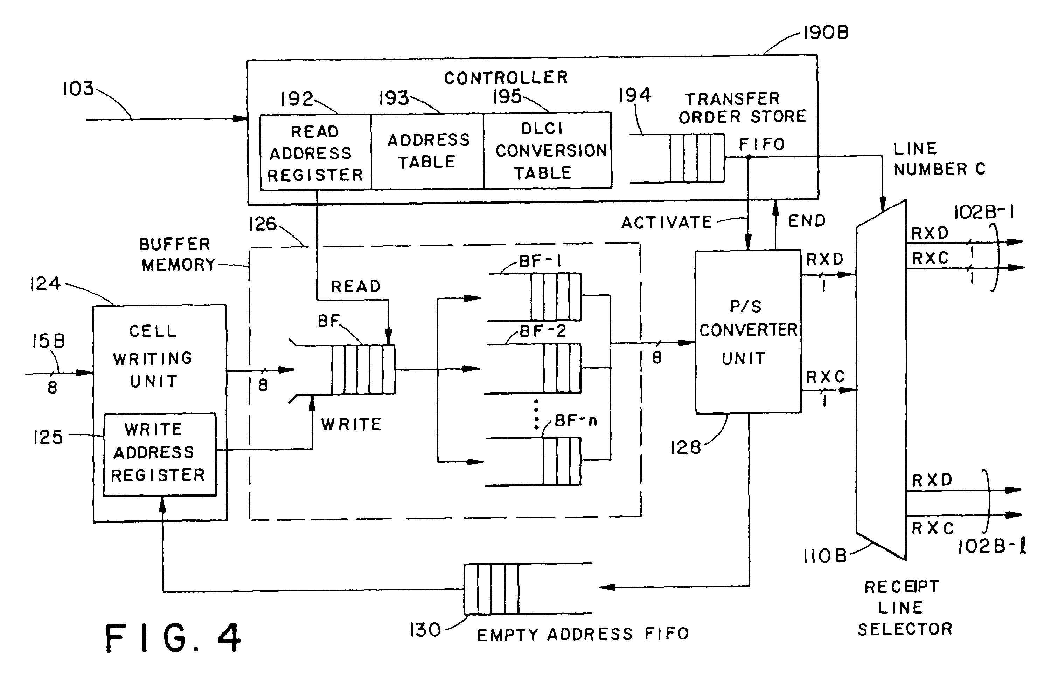

Fig. 3 is a block diagram showing the transmission system in the above-mentioned ADP processing unit 100, and Fig. 4 is a block diagram of the receiving system in the ADP processing unit 100.

In the previously mentioned CCITT Draft Recommendation 1.121, the final cell format (cell size, etc.) is not yet determined. Thus, a cell format shown in Fig. 5 B is assumed in the ADP processing in Figs. 3 and 4. Each cell. 51 comprises 36 bytes, and consists of a cell header 52 of 4 bytes and an information field 53 of 32 bytes. The cell header 52 includes first 12 bits 520 which form a VCN (Virtual Channel Number) field for identification of the cell, a reserved field 521 and an HCS (Header Check Sequence) field 522 for detecting cell header abnormalities. At the head of the information field 53, there is an ADP header 54 of 2 bytes. Therefore, a region 55 wherein frame data shown in Fig. 5 A can be stored has 30 bytes for each cell. The ADP header 54 has: a cell type region 542 of 2 bits indicating the type of the cell (i.e. beginning of frame, end of frame, middle of frame, or one-cell=one-frame), as shown in Fig. 5 C ; a region 543 of one byte indicating the effective information length of the information field 53; and a reserved region 541.

For example, if the length between the flags 50A and 50F of the frame 50 in Fig. 5 A is 6 bytes, then it can be segmented into a cell which is of the type "1 cell = 1 frame" having an effective information length of 6. If the frame length is 40 bytes, then it can be divided into two cells, namely, a first cell of the "beginning of frame" type having an effective information length of 30, and a second cell of the "end of frame" type having an effective information length of 10.

On the other hand, the route information field 56 at the beginning of the cell of Fig. 5 B is applied thereto only within the ATM switching system, and each cell is otherwise transmitted in a format lacking the above-mentioned route information field 56 through the subscriber lines 11 or through the trunk lines 14. The route information field is used to store therein information specifying the output line to which a cell switched in the ATM switch 30 should be transmitted, and the subscriber line number, etc.

Next, details of the transmitting subsystem of the ADP processing unit will be described with reference to Fig. 3.

A transmission line selector 110A has signal line sets 102A(102A-1 - 102A-I), each of which consist of three lines, namely, a transmission data (TXD), transmission dock (TXC) and echo (E) lines, and each of which is connected to a corresponding one of LAPD-LSI's 101 (101-1- 101-I); the selector 110A has a function of collision control to extract only the frame on a specified line when a plurality of frames are simultaneously transmitted from a plurality of LAPD's. The D-channel access procedure, described in the CCITT Recommendation 1.430, may be used as the procedure of the collision control. The line number selected in accordance with the collision control is communicated to a CTL 190, while transmission data is transmitted to a frame detector 112. The transmission line selector 110A is necessary only in the first embodiment of the present invention.

The frame detector 112 will communicate the DLCI (Data Link Connection Identifier) in the address field 50B of the frame to the CTL 190, and will arrange the data from the address field to FCS (Frame Check Sequence) field 50E into an 8-bit parallel data after deleting a '0' bit for flag identification, and transmit it to a counter 116. If the data is the last data of a frame, then such fact is communicated to the counter 116 through a final notice signal line.

The counter 116 will transfer the frame data to a FIFO-A 120. When the FIFO-A has been filled by 30 byte data transferred thereto, or the last data of a frame has been transferred thereto, the cell type 542 and the effective information length 543 shown in the ADP header format of Fig. 5 B are communicated to the CTL 190, and thereafter it will transfer data from the frame detector 112 to a FIFO-B 121. When the FIFO B has been filled up or the last frame data has been transferred thereto during transfer of data to the FIFO-B, the counter 116 will likewise communicate the cell type and the effective information length to the CTL 190, and will transfer subsequent data to the FIFO-A 120. In the manner as described, the FIFO-A and FIFO-B are alternately used.

The CTL 190 is constituted by, for example, µCPU'S, ROM's and RAM's, and contains a DLCI/header corresponding table 191, in which contents of headers (all of the 10 bytes from the route information 56 to the ADP header 54 in Fig. 5 B) corresponding to the combinations of line numbers and DLCI are set from outside via-control bus 103. The CTL 190 will search the DLCI/header corresponding table 191 upon receiving the communication of the line number and the DLCI, and write the contents of the corresponding table onto a header register 118.

In the second embodiment of the present invention, however, after the DLCI/header corresponding table has been searched, the unique DLCI is converted, using a DLCI conversion table 195, into a DLCI which is actually transmitted to a subscriber device. Subsequently, upon receipt of the communication of the cell type and effective information length from the counter 116, a corresponding register, within a header register 118, is rewritten in accordance with an ADP header format 54 of Fig. 5 B and a selector (SEL) 122 is activated.

The SEL 122 will first transmit the data in a header register 118, and will next transmit the data in the FIFO-A 120, thereby completing the transmission of the cell. Subsequently, when receiving an activation from the CTL, the SEL 122 will transmit the data in the header register 118, and will then transmit the data in the FIFO-B 121, thereby completing the transmission of the cell. Subsequently, the SEL 122 will transmit the data in the FIFO-A and the data in the FIFO-B alternately.

Meanwhile, an amount to be processed for forming a header for the transmission of a cell can be reduced by arranging such that the searching of the DLCI/header corresponding table 191 and the setting of the ADP header in the header register are performed separately in the CTL and a reading of the data in the header register 118 will not change such data. For example, when a frame is divided into a plurality of cells for transmission, it is not necessary to search the DLCI/header corresponding table 191 for each cell if the arrangement is such that the searching of the DLCI/header corresponding table is performed only for transmitting the cell at the beginning of the frame and, for the subsequent cells, only the ADP header in the header register 118 is rewritten.

Next, details of the receiving subsystem of the ADP processing unit will be described with reference to Fig. 4. Therein, a cell writing unit 124 is connected with the ATM switch 30 through a receiving bus 15B for receiving cells of a signalling channel from a subscriber unit The received cell data is transferred to an empty area of a first buffer BF in a buffer memory 126 according to an address indicated by a WA (Write Address) register 125 within the cell writer 124. Subsequently, the data in an empty address FIFO 130 is set in the WA 125 for preparation for receiving the next cell.

The buffer memory 126 (BFM) comprises:the first buffer BF of the form of a FIFO for receiving and temporarily storing therein cells arriving there at a rate of, for example, 150 Mbit/s; and second buffers BF-I - BF-n of a FIFO form prepared for respective combinations of line.numbers and VCN in cell headers for the subsequent reassembling process. The construction of the BF of the form of FIFO, the manner of using a chain pointer, and the manner of using the WAregister 125, RA (Read Address) register 192, and the empty address FIFO 130 are described in the previously mentioned literature "A Memory Switch Architecture for ATM Switching Network".

A CTL 190 has an RA register 192 which corresponds to the first buffer BF, and will check the line number, the VCN in the cell header and the cell type in the ADP header among the contents of the cell of the address indicated by the RA, and will first transfer such cell data to a second buffer BF-i which has the combination of the corresponding line number and VCN. In this case, an actual data transfer from memory to memory is not performed but transfer is performed only by rewriting a second buffer address table 193 provided in the CTL 190 and further rewriting the buffer chain pointer. If checking of the cell type in the ADP header shows that all cells of one frame have been received, then the top address of the buffer wherein the top cell of the frame is stored and the line number is written in a transfer order storing FIFO 194. The CTL 190 will activate a P/S unit 128 in accordance with the data in the transfer order storing FIFO 194 and at the same time specify an output line number to a receipt line selector 110B. In the second embodiment of the present invention, when the P/S unit is activated, a unique DLCI is derived, using a DLCI conversion table 195, from the DLCI from a subscriber unit, and the unique DLCI is simultaneously communicated to the P/S unit.

The P/S unit 128 will read the data of the specified address in response to an activation from the CTL 190, and will convert data other than the header field into a serial data and will transfer such data to the receipt line selector 1108 after insertion thereto of "0" and adding a frame delimiting cell type flag 50A, 50F thereto. In the second embodiment of the present invention, conversion into a unique DLCI is also performed.

The receipt line selector 110B is connected with LAPD-LSI 101 (101-1 - 101-j), via signal line sets 102B 102B-1 - 102B-I), each of which consists of two lines, namely, a receipt data line (RxD) and a receipt clock (RxC), and has a function of transmitting data only to a signal line having a line number specified by the CTL 190. Meanwhile, the receipt line selector 110B is, as is the transmission line selector shown in Fig. 3, necessitated only in the arrangement of the first embodiment and not necessary in the arrangement of the second embodiment.

Although the above embodiments are arranged to control each hardware in the ADP processing unit by means of the CTL unit 190 which uses a µCPU, it is also possible to increase the processing rate by implementation of all the functions of the CTL by hardware. In such a case, in Fig. 4, the first buffer BF for rate adaptation (waiting) may be omitted, and the contents of the header may be checked in the cell writer and the cell data may be directly transferred to the second buffers BF-I - BF-n.

Where management of VCN is performed for each subscriber line separately from the others, different subscribers can simultaneously transmit cells having the same VCN. Then, in accordance with a system in which an ADP processing unit is provided common to a plurality of subscriber lines, identification of cells only from the VCN will mix cells from different subscribers, with the result that reassembling cannot be normally performed. In accordance with the present invention, when a cell is received from a subscriber, route information 56 is added to the cell, where the subscriber line number is stored, and further in the ADP processing unit receipt system the cell is identified from such subscriber line number and the VCN, whereby reassembling can be normally performed. Further, where the management of DLCI is performed for each subscriber line separately from the others, different subscribers can simultaneously use the same DLCI. Then, in accordance with the arrangement of the second embodiment (Fig. 2), wherein a LAPD-LSI is provided common to a plurality of subscriber lines, two or more links having the same DLCI for different subscribers cannot be discriminated. In this case, links can be normally discriminated if the arrangement is such that a DLCI conversion table is provided in the ADP processing unit 100 and, between the LAPD-LSI 101 and the ADP processing unit 100, unique DLCI's are used for the subscriber lines 1 ... j.

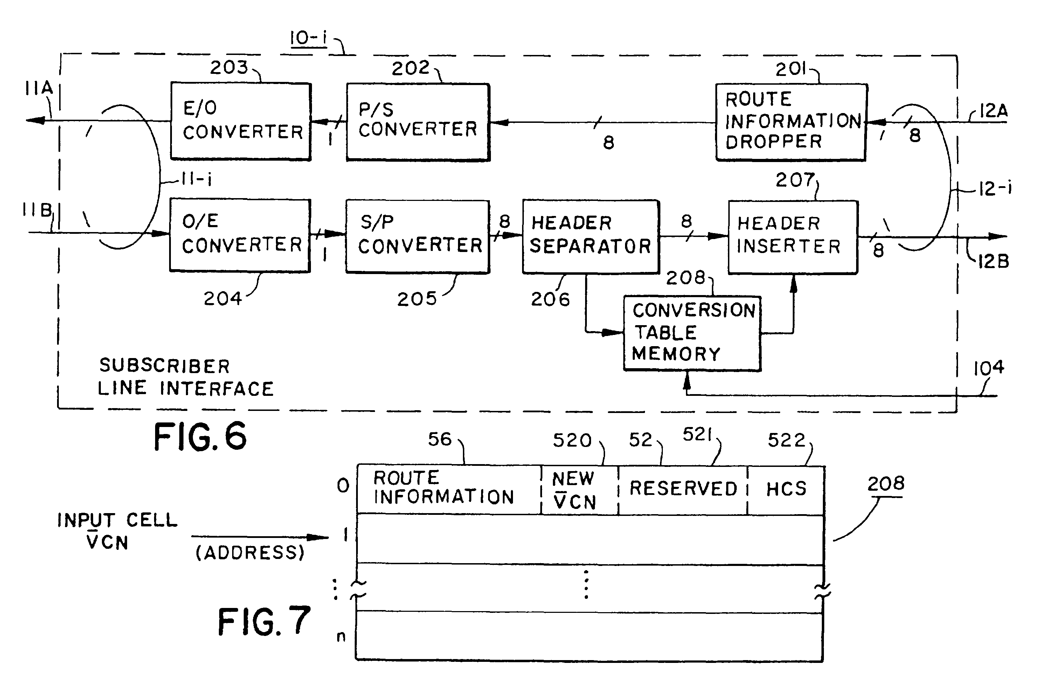

Turning now to Fig. 6, with continued reference to Fig. 5, shown in detail is construction of the subscriber line interface 10-i. The subscriber line interface 10-i communicates route information 56 from each cell 51 inputted from the ATM switch 30 through reception bus 12A, a parallel/serial (P/S) converter 202 for converting parallel data of the input cell which has no route information to bit serial data, and electrical/optical (E/O) signal converter 203 for converting the bit serial data to optical signals.

The subscriber line interface 10-i further comprises an optical/electrical (O/E) signal converter 204 for converting optical signals transmitted from a subscriber terminal onto a transmission optical fibre 11B to bit serial electrical signals, a serial/parallel (S/P) converter 205 for converting the bit serial signal to 8-bit parallel data, a header separator circuit 206, a header inserter circuit 207, and a header conversion table memory 208.

As stated hereinbefore, each cell transmitted from the subscriber terminal includes a cell header 52 and an information field 53 as shown in Fig. 5B. The header separator circuit 206 operates to separate the cell header 52 from the received cell in order to access the header conversion table 208 in accordance with the value of field VCN extracted from the header, and to provide the information field 53 of the received cell to the header inserter circuit 207.

The header conversion table memory 208 stores a plurality of records, each of which comprises route information 56, and a new header 52 including a new VCN 520 as shown in Fig. 7. One of these records is read out to the header inserter circuit 207 by addressing in accordance with the extracted VCN. The header inserter circuit 207 operates to output a header converted cell which has a route information field 56 and a new cell header 52 onto a transmission bus 12B.

If an input (extracted) VCN has a value corresponding to the signalling channel, a record which includes route information to designate the bus 15 as an output port is read out If the input VCN corresponds to an information channel, a record which designates one of output buses 13-1 through 13-k is read out. The contents of the header conversion table memory 208 are prepared by the processor 40 through a bus 104.

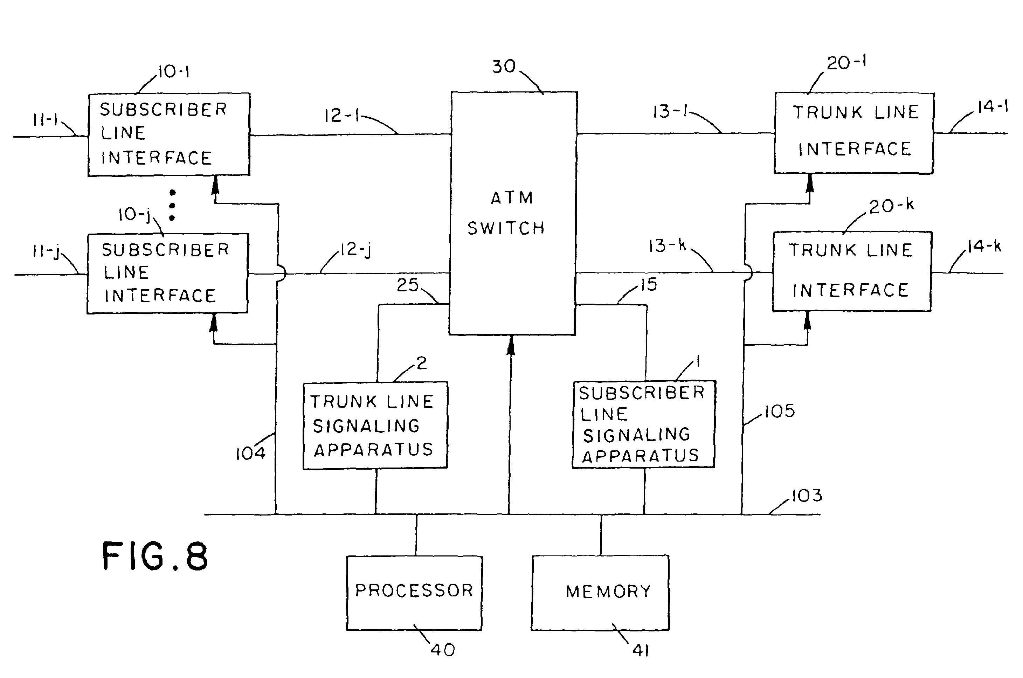

Fig. 8 shows a third embodiment of the present invention. In this embodiment, a signalling control system, the same as that which is adopted in the first or second embodiment, is also applied to the trunk line signal processing. A trunk line signalling apparatus 2 has substantially the same construction as the line signalling apparatus shown in Figs. 1 or 2.

In Fig. 8, signalling channel cells transmitted from the subscriber terminal are relayed to the bus 15 by the ATM switch 30. A reassembly process from cell(s) to a frame and the layer 2 process are performed by the subscriber line signalling apparatus, whereby a signalling channel message extracted from the reassembled frame is supplied to the processor 40. Each trunk line interface (20-1 - 20-k) may have the same construction as the subscriber line interface shown in Fig. 6.

Similar to this process, signalling channel cells transmitted from another ATM switch through one of the optical fibres 14-1 through 14-k are relayed to a bus 25 by the ATM switch 30 and inputted to the trunk line signalling apparatus 2. The trunk line signalling apparatus 2 performs the reassembling from the received cells to a frame and the level 2 process, so that a signalling channel message extracted from the reassembled frame is also supplied to the processor 40.

The processor 40 performs a layer 3 process as to the signalling channel message supplied from the signalling apparatuses 1 and 2. As a result, if it is necessary to transmit a new signalling channel message to another ATM switch, the processor 40 suitably communicates a request for transmitting the new message to the trunk line signalling apparatus. The trunk line signalling apparatus performs the layer 2 processing and the segmenting process as to the new message, and sends out a series of new cells thus produced to the ATM switch 30 through the bus 25.

These cells are relayed to one of the trunk line buses 13-1 through 13-k according to their route information which is added by the ADP processing unit in the trunk line signalling apparatus.

Each of the trunk line interfaces 20-1 through 20-k is provided with a header conversion table memory namely as the subscriber line interface 10-i shown in Fig. 6. The contents of the table are also managed by the processor via a bus line 105.

As is clear from the above description, in the subscriber line signalling apparatus an ADP processing unit is provided common to the subscriber lines, whereby advantages can be achieved in that the cell dropper/inserters, one for each subscriber line, buses for line collection/distribution or multiplexer/demultiplexers necessitated in a subscriber line signalling apparatus constructed in a similar manner to prior art ISDN switching systems, can be omitted and the ADP processing units can be reduced in number, so that the amount of hardware can be reduced.

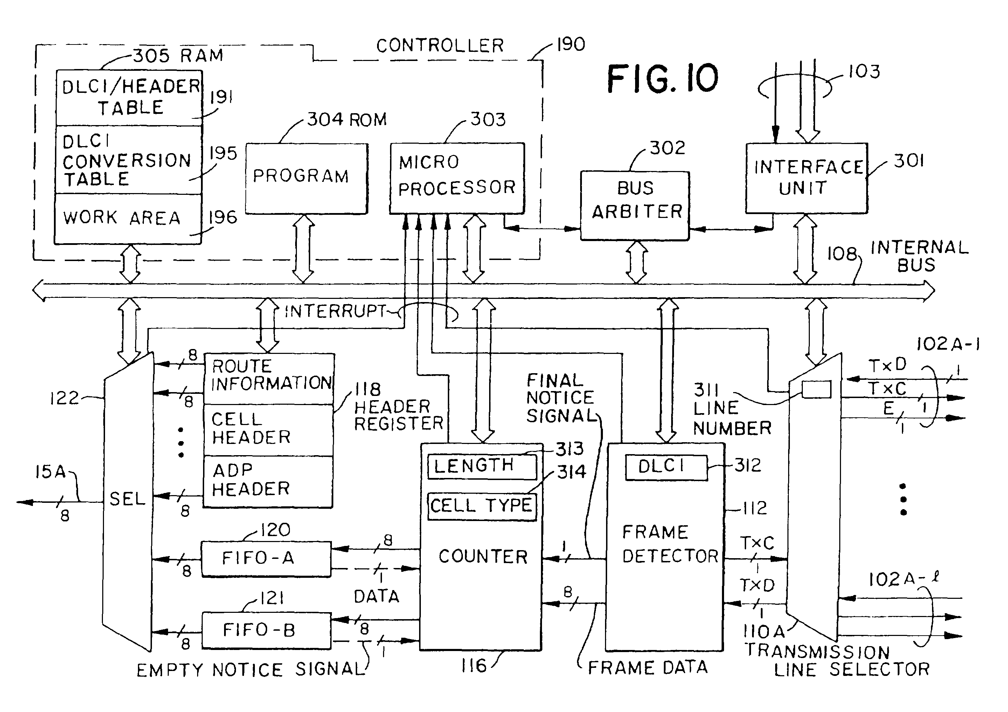

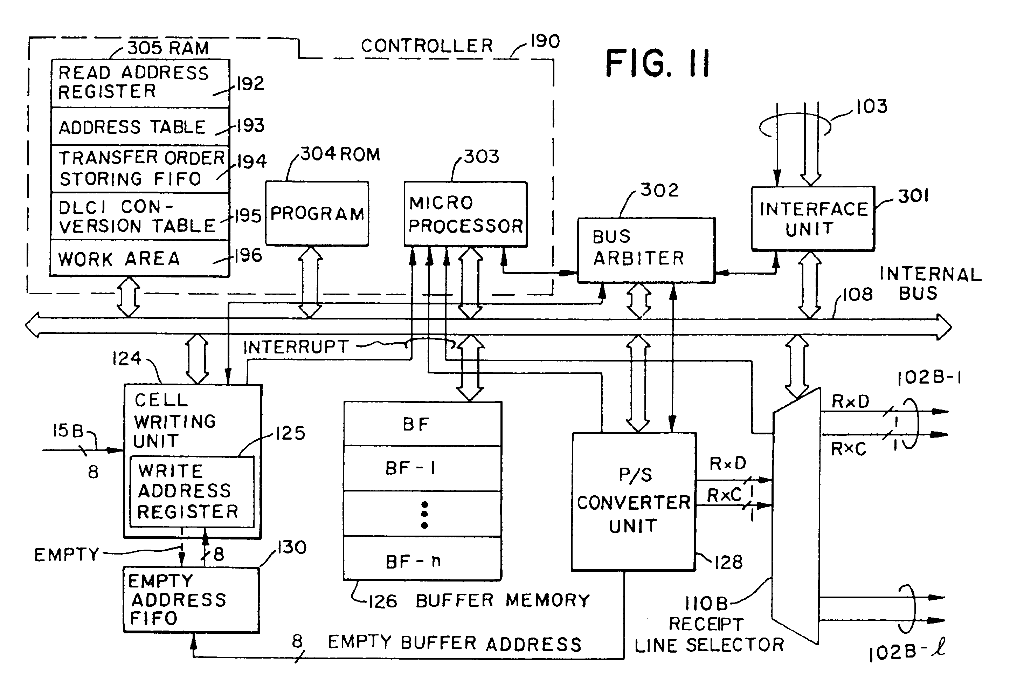

Figs. 10 and 11 are examples of an actual construction for the transmitting subsystem of Fig. 3 and the receiving subsystem of Fig. 4, of the ADP processing unit, respectively.

Fig. 12 shows an ATM switching network and layer model of an ATM terminal and an ATM switching system.

## Claims

1. A broadband communication system comprising
switching means having an asynchronous transfer mode switch (30), a plurality of input lines (12B, 13) and a plurality of output lines (12A, 13), said asynchronous transfer mode switch directing fixed length cells supplied on said input lines to respective ones of said output lines selected in accordance with routing information included in each of said supplied cells, and
a signalling apparatus (1, 2) for performing a protocol processing of signalling channels, wherein
said signalling apparatus is connected to said asynchronous transfer mode switch (30) through a predetermined pair of lines (15; 25) composed of one (15A) of said input lines and one (15B) of said output lines,
said switching means includes means (10, 20, 206, 207, 208) for receiving cells, identifying whether received cells are signalling cells including signalling channel data, applying to such signalling cells routing information specifying the output line (15B) of said predetermined pair and supplying the signalling cells to the asynchronous transfer mode switch (30) on one of said input lines excepting the input line (15A) of said predetermined pair,
said asynchronous transfer mode switch (30) directs signailing cells to the output line (15B) of said predetermined pair in accordance with said applied routing information, and
said signalling apparatus includes an adaptation processing unit (100) for reassembling the signalling cells to signalling frame data, and a signalling frame processing unit (101) for processing the signalling frame data,
wherein said routing information further includes the number of a line (11, 14) on which the cell is received by the switching means, and the adaptation processing unit identifies the signalling cells from said line number and a virtual channel number to reassemble them without mixing signalling cells from different lines (11, 14) using the same virtual channel number.

2. The broadband communication system according to claim 1, wherein
said adaptation processing unit (100) is coupled with said asynchronous transfer mode switch (30) to communicate signalling cells through said predetermined pair of input and output lines (15A, 15B) and to perform reassembling and segmenting of signalling frame data, and
said signalling frame -processing unit (101) is coupled with said adaptation processing unit (100) to perform protocol processing on signalling frame data, and includes means (103) for communicating frame data with an associated data processing means (40) for a call control.

3. The broadband communication system according to claim 2, wherein said signalling apparatus (1) is provided with a plurality of signalling frame processor units (101-1 to 101-1) coupled with said adaptation processing unit (100).

4. The broadband communication system according to claim 2 or 3, wherein said adaptation processing unit (100) includes means (195) for converting a link identification number of a signalling frame.

5. The broadband communication system according to any one of claims 1 to 4, wherein said switching means is provided with a plurality of interface means (10-1 to 10-j, 20-1 to 20-k) each connected to one of said input lines excepting the input line (15A) of said predetermined pair and having a function to provide said signalling cell with said routing information specifying the output line (15B) of said predetermined pair.

6. The broadband communication system according to any one of claims 2 to 5, wherein said adaptation processing unit (100) includes
means (112) for detecting signalling frame data,
means (190A) for apportioning cell data in fixed length increments from the signalling frame data,
means (120, 121) for queuing the cell data in fixed length increments,
means (118) for isolating identification information and
means (122) for appending the identification information to the cell data, in fixed length increments, for transmission of the cell data to the asynchronous transfer mode switch (30) through the input line (15A) of said predetermined pair.

7. The broadband communication system according to any one of claims 2 to 5, wherein said adaptation processing unit (100) includes
means (112) for detecting a series of data frames and a completion of the series of data frames,
means (120, 121) for storing frame data within the series of data frames, and
means (190A, 122) for transmitting cell data to the asynchronous transfer mode switch (30), upon a detection of a completed series of data frames, through the input line (15A) of said predetermined pair.

8. The broadband communication system according to any one of claims 2 to 7, wherein said adaptation processing unit (100) includes
means (124) for receiving a sequence of signalling cells from the asynchronous transfer mode switch (30) through the output line (15B) of said predetermined pair,
means (128) for separating identification information and cell data of each of said received signalling cells,
means (BF-1 to BF-n) for accumulating the cell data,
means (190B) for computing data link communication identifier data from the identification information and from address information acquired from said association data processing means (40), and for appending the data link communication identifier data to the accumulated cell data to form frame data, and
means (110B) for communicating the frame data to said signalling frame processing unit (101).

9. The broadband communication system according to claim 1, wherein said signalling apparatus comprises
a subscriber line signalling apparatus (1) connected to said asynchronous transfer mode switch (30) through a first pair (15) of said input and output lines for performing protocol processing of signalling channels on signalling cells transferred into said switching means through a subscriber line (11) coupled with one of said input lines, and
a trunk line signalling apparatus (2) connected to said asynchronous transfer mode switch (30) through a second pair (25) of said input and output lines for performing protocol processing of signalling channels on signalling cells transferred into said switching means through a trunk line (14) coupled with one of said input lines.

10. A method for communicating fixed-length signalling cells including signalling channel data with a subscriber line signalling apparatus (1) in a broadband communication system, comprising the following steps:
inputting signalling cells from transmission lines to switching means having an asynchronous transfer mode switch (30),
identifying whether the input cells are signalling cells and applying routing information to the signalling cells by said switching means, said routing information specifying an output line (15B) of said asynchronous transfer mode switch connected to said subscriber line signalling apparatus,
directing the signalling cells to said specified output line (15B) by the asynchronous transfer mode switch in accordance with said applied routing information,
supplying the signalling cells to said subscriber line signalling apparatus through the specified output line (15B), and
reassembling the signalling cells to signalling frame data and processing the signalling frame data in said subscriber line signalling apparatus,
wherein said routing information further includes a number of a line (11, 14) on which the cell is received by the switching means, and signalling cells are identified in said subscriber line signalling apparatus from said line number and a virtual channel number to reassemble them without mixing signalling cells from different lines (11, 14) using the same virtual channel number.

11. The method of claim 10, including
supplying frame data to said subscriber line signalling apparatus from an associated data processing means (40) for performing a call control,
segmenting said frame data into a plurality of data blocks in said subscriber line signalling apparatus,
appending cell identification information to each of said data blocks to form a signalling cell in said subscriber line signalling apparatus, and
transferring the signalling cell to the asynchronous transfer mode switch from said subscriber line signalling apparatus through a specified input line (15A) which forms a pair with said specified output line (15B).

12. The method of claim 11, including the following steps performed by said subscriber line signalling apparatus
detecting a series of data frames,
storing frame data within the series of data frames,
detecting a completion of the series of data frames, and
transmitting the cell data to the asynchronous transfer mode switch, upon a detection of a competed series of data frames, through said specified input line (15A).

## Patentansprüche

1. Breitband-Kommunikationssystem, aufweisend:
eine Vermittlungseinrichtung mit einem Koppler (30) für einen asynchronen Transfermodus, mehreren Eingangsleitungen (12B, 13) und mehreren Ausgangsleitungen (12A, 13), wobei der Koppler für den asynchronen Transfermodus Zellen fester Länge, die auf den Eingangsleitungen zugeführt werden, zu entsprechenden Ausgangsleitungen leitet, die entsprechend einer Weginformation in jeder der zugeführten Zellen ausgewählt werden, und
eine Signalisierungsanordnung (1, 2) zur Durchführung einer Protokollverarbeitung für Signalkanäle, wobei
die Signalisierungsanordnung mit dem Koppler (30) für den asynchronen Transfermodus über ein bestimmtes Leitungspaar (15; 25) aus einer (15A) der Eingangsleitungen und einer (15B) der Ausgangsleitungen verbunden ist,
die Vermittlungseinrichtung eine Einrichtung (10, 20, 206, 207, 208) zum Empfang von Zellen, zum Identifizieren, ob empfangene Zellen Signalzellen mit Signalkanaldaten sind, zum Anbringen von Weginformation, die die Ausgangsleitung (15B) des bestimmten Paars angibt, an solche Signalzellen und zum Liefern der Signalzellen an den Koppler (30) für den asynchronen Transfermodus auf einer der genannten Eingangsleitungen außer der Eingangsleitung (15A) des bestimmten Paars aufweist,
der Koppler (30) für den asynchronen Transfermodus, Signalzellen entsprechend der angebrachten Weginformation an die Ausgangsleitung (15D) des bestimmten Paars leitet, und
die Signalisierungsanordnung eine Adaptions-Verarbeitungseinheit (100) zum Wiederzusammenstellen der Signalzellen zu Signalrahmendaten und eine Signalrahmen-Verarbeitungseinheit (101) zur Verarbeitung der Signalrahmendaten aufweist,
wobei die Weginformation außerdem die Nummer einer Leitung (11, 14), auf der die Zelle von der Vermittlungseinrichtung erhalten wird, enthält und die Adaptions-Verarbeitungseinheit die Signalzellen aus der Leitungsnummer und einer virtuellen Kanalnummer identifiziert, um sie wieder zusammenzustellen, ohne Signalzellen von verschiedenen Leitungen (11, 14), die die gleiche virtuelle Kanalnummer verwenden, zu mischen.

2. Breitband-Kommunikationssytem nach Anspruch 1, wobei
die Adaptions-Verarbeitungseinheit (100) mit dem Koppler (30) für den asynchronen Transfermodus verbunden ist, um Signalzellen durch das bestimmte Paar Eingangs- und Ausgangsleitungen (15A, 15B) zu übermitteln und ein Wiederzusammenstellen und Segmentieren von Signalrahmendaten durchzuführen, und
die Signalrahmen-Verarbeitungseinheit (101) mit der Adaptions-Verarbeitungseinheit (100) verbunden ist, um die Signalrahmendaten einer Protokollverarbeitung zu unterwerfen, und eine Einrichtung (103) enthält, um für eine Rufsteuerung Rahmendaten zwischen ihr und einer zugeordneten Datenverarbeitungseinrichtung (40) zu übermitteln.

3. Breitband-Kommunikationssytem nach Anspruch 2, wobei die Signalisierungsanordnung (1) mit mehreren Signalrahmen-Prozessoreinheiten (101-1 bis 101-1) versehen ist, die mit der Adaptions-Verarbeitungseinheit (100) verbunden sind.

4. Breitband-Kommunikationssytem nach Anspruch 2 oder 3, wobei die Adaptions-Verarbeitungseinheit (100) eine Einrichtung (195) zum Umwandeln einer Verbindungsidentifikationsnummer eines Signalrahmens enthält.

5. Breitband-Kommunikationssytem nach einem der Ansprüche 1 bis 4, wobei die Vermittlungseinrichtung mit mehreren Interfaceeinrichtungen (10-1 bis 10-j, 20-1 bis 20-k) versehen ist, die jeweils mit einer der Eingangsleitungen außer der Eingangsleitung (15A) des bestimmten Paars verbunden sind und eine Funktion aufweisen, um die Signalzellen mit der Weginformation zu versehen, die die Ausgangsleitung (15B) des bestimmten Paars angibt.

6. Breitband-Kommunikationssytem nach einem der Ansprüche 2 bis 5, wobei die Adaptions-Verarbeitungseinheit (100) aufweist:
eine Einrichtung (112) zur Erkennung von Signalrahmendaten,
eine Einrichtung (190A) zum Zuteilen von Zellendaten in Schritten fester Länge aus den Signalrahmendaten,
eine Einrichtung (120, 121) zum Aufreihen der Zellendaten in Schritten fester Länge,
eine Einrichtung (118) zum Isolieren einer Identifikationsinformation und
eine Einrichtung (122) zum Anhängen der Identifikationsinformation an die Zellendaten in Schritten fester Länge, um die Zellendaten über die Eingangsleitung (15A) des bestimmten Paars an den Koppler (30) für den asynchronen Transfermodus zu senden.

7. Breitband-Kommunikationssytem nach einem der Ansprüche 2 bis 5, wobei die Adaptions-Verarbeitungseinheit (100) aufweist:
eine Einrichtung (112) zum Erfassen einer Reihe von Datenrahmen und einer Beendigung der Reihe von Datenrahmen,
eine Einrichtung (120, 121) zum Speichern von Rahmendaten innerhalb der Reihe von Datenrahmen, und
eine Einrichtung (190A, 122) zum Übertragen von Zellendaten über die Eingangsleitung (15A) des bestimmten Paars an den Koppler (30) für den asynchronen Transfermodus aufgrund einer Erfassung einer beendeten Reihe von Datenrahmen.

8. Breitband-Kommunikationssytem nach einem der Ansprüche 2 bis 7, wobei die Adaptions-Verarbeitungseinheit (100) aufweist:
eine Einrichtung (124) zum Empfang einer Abfolge von Signalzellen von dem Koppler (30) für den asynchronen Transfermodus über die Ausgangsleitung (15B) des bestimmten Paars,
eine Einrichtung (128) zum Trennen von Identifikationsinformation und Zellendaten der jeweils empfangenen Signalzellen,
eine Einrichtung (BF-1 bis BF-n) zum Sammeln der Zellendaten,
eine Einrichtung (190B) zum Berechnen von Datenverbindungs-Übermittlungs-Identifikationsdaten aus der Identifikationsinformation und aus einer Adressinformation, die von der zugehörigen Datenverarbeitungseinrichtung (40) gewonnen wird, und zum Anhängen der Datenverbindungs-Übermittlungs-Identifikationsdaten an die gesammelten Zellendaten, um Rahmendaten zu bilden, und
eine Einrichtung (110B) zum Übermitteln der Rahmendaten an die Signalrahmen-Verarbeitungseinheit (101).

9. Breitband-Kommunikationssystem nach Anspruch 1, wobei die Signalisierungsanordnung aufweist:
eine Teilnehmerleitungs-Signalisierungsanordnung (1), die über ein erstes Paar (15) der Eingangs- und Ausgangsleitungen mit dem Koppler (30) für den asynchronen Transfermodus verbunden ist, um die Signalzellen, die über eine mit einer der Eingangsleitungen verbundene Teilnehmerleitung (11) in die Vermittlungseinrichtung hinein übertragen werden, einer Protokollverarbeitung für Signalkanäle zu unterwerfen, und
eine Verbindungsleitungs-Signalisierungsanordnung (2), die über ein zweites Paar (25) der Eingangs- und Ausgangsleitungen mit dem Koppler (30) für den asynchronen Transfermodus verbunden ist, um Signalzellen, die über eine mit einer der Eingangsleitungen verbundene Verbindungsleitung (14) in die Vermittlungseinrichtung hinein übertragen werden, einer Protokollverarbeitung für Signalkanäle zu unterwerfen.

10. Verfahren zur Übermittlung von Signalzellen fester Länge, die Signalkanaldaten enthalten, mittels einer Teilnehmerleitungs-Signalisierungsanordnung (1) in einem Breitband-Kommunikationssystem, mit folgenden Schritten:
Eingeben von Signalzellen von Übertragungsleitungen in eine Vermittlungseinrichtung mit einem Koppler (30) für einen asynchronen Transfermodus,
Identifizieren, ob die eingegebenen Zellen Signalzellen sind, und Anbringen von Weginformation an die Signalzellen durch die Vermittlungseinrichtung, wobei die Weginformation eine Ausgangsleitung (15B) des Kopplers für den asynchronen Transfermodus angibt, die mit der Teilnehmerleitungs-Signalisierungsanordnung verbunden ist,
Leiten der Signalzellen durch den Koppler für den asynchronen Transfermodus entsprechend der angebrachten Weginformation an die angegebene Ausgangsleitung (15B),
Liefern der Signalzellen durch die angegebene Ausgangsleitung (15B) an die Teilnehmerleitungs-Signalisierungsanordnung, und
Wiederzusammenstellen der Signalzellen zu Signalrahmendaten und Verarbeiten der Signalrahmendaten in der Tielnehmerleitungs-Signalisierungsanordnung,
wobei die Weginformation außerdem eine Nummer einer Leitung (11, 14) beinhaltet, auf der die Zelle von der Vermittlungseinrichtung empfangen wird, und Signalzellen in der Teilnehmerleitungs-Signalisierungsanordnung anhand der Leitungsnummer und einer virtuellen Kanalnummer identifiziert werden, um sie wieder zusammenzustellen, ohne Signalzellen von verschiedenen Leitungen (11, 14), die die gleiche virtuelle Kanalnummer verwenden, zu mischen.

11. Verfahren nach Anspruch 10, mit folgenden Schritten:
Liefern von Rahmendaten an die Teilnehmerleitungs-Signalisierungsanordnung von einer zugeordneten Datenverarbeitungseinrichtung (40), um eine Rufsteuerung durchzuführen,
Segmentieren der Rahmendaten in mehrere Datenblöcke in der Teilnehmerleitungs-Signalisierungsanordnung,
Anhängen von Zellenidentifikationsinformation an jeden der Datenblöcke, um in der Teilnehmerleitungs-Signalisierungsanordnung eine Signalzelle zu bilden,
Übertragen der Signalzelle von der Teilnehmerleitungs-Signalisierungsanordnung über eine bestimmte Eingangsleitung (15A), die mit der bestimmten Ausgangsleitung (15B) ein Paar bildet, an den Koppler für den asynchronen Transfermodus.

12. Verfahren nach Anspruch 11, mit folgenden Schritten, die von der Teilnehmerleitungs-Signalisierungsanordnung durchgeführt werden:
Erfassen einer Reihe von Datenrahmen,
Speichern von Rahmendaten innerhalb der Reihe von Datenrahmen,
Erfassen einer Beendigung der Reihe von Datenrahmen, und
Übertragen der Zellendaten über die bestimmte Eingangsleitung (15A) an den Koppler für den asynchronen Transfermodus aufgrund einer Erfassung einer beendeten Reihe von Datenrahmen.

## Revendications

1. Système de communication à large bande comportant
des moyens de commutation comportant un commutateur à mode de transfert asynchrone (30), une pluralité de lignes d'entrée (12B, 13) et une pluralité de lignes de sortie (12A, 13), ledit commutateur à mode de transfert asynchrone dirigeant des cellules de longueur fixe, délivrées sur lesdites lignes d'entrée, vers des lignes respectives sélectionnées parmi lesdites lignes de sortie conformément à des informations de routage incluses dans chacune desdites cellules délivrées, et
un dispositif de signalisation (1, 2) destiné à effectuer le traitement d'un protocole propre aux canaux de signalisation, dans lequel
ledit dispositif de signalisation est relié audit commutateur à mode de transfert asynchrone (30) via une paire de lignes (15 ; 25) prédéterminée, composée de l'une (15A) desdites lignes d'entrée et de l'une (15B) desdites lignes de sortie,
lesdits moyens de commutation incluent des moyens (10, 20, 206, 207, 208) pour recevoir les cellules, identifier si les cellules reçues sont des cellules de signalisation incluant des données de canaux de signalisation, appliquer aux éventuelles cellules de signalisation des informations de routage spécifiant la ligne de sortie (15B) de ladite paire prédéterminée et délivrer les cellules de signalisation au commutateur à mode de transfert asynchrone (30) sur l'une desdites lignes d'entrée, ligne autre que la ligne d'entrée (15A) de ladite paire prédéterminée,
ledit commutateur à mode de transfert asynchrone (30) dirige les cellules de signalisation vers la ligne de sortie (15B) de ladite paire prédéterminée conformément auxdites informations de routage appliquées, et
ledit dispositif de signalisation inclut une unité de traitement d'adaptation (100) destinée à réassembler les cellules de signalisation en données de trames de signalisation, et une unité de traitement de trames de signalisation (101) destinée à traiter les données des trames de signalisation,
dans lequel lesdites informations de routage incluent en outre le numéro d'une ligne (11, 14) sur laquelle la cellule est reçue par les moyens de commutation, et l'unité de traitement d'adaptation identifie les cellules de signalisation à partir dudit numéro de ligne et d'un numéro de canal virtuel afin de les réassembler sans mélanger les cellules de signalisation provenant de lignes différentes (11, 14) utilisant le même numéro de canal virtuel.

2. Système de communication à large bande selon la revendication 1, dans lequel
ladite unité de traitement d'adaptation (100) est reliée audit commutateur à mode de transfert asynchrone (30) pour échanger des cellules de signalisation via ladite paire prédéterminée de lignes d'entrée et de sortie (15A, 15B) et effectuer le réassemblage et la segmentation des données des trames de signalisation, et
ladite unité de traitement de trames de signalisation (101) est reliée à ladite unité de traitement d'adaptation (100) pour effectuer le traitement d'un protocole sur les données des trames de signalisation, et inclut des moyens (103) pour échanger des données de trames avec des moyens de traitement de données (40) associés pour le traitement d'un appel.

3. Système de communication à large bande selon la revendication 2, dans lequel ledit dispositif de signalisation (1) comporte une pluralité d'unités de traitement de trames de signalisation (101-1 à 101-1) reliées à ladite unité de traitement d'adaptation (100).

4. Système de communication à large bande selon la revendication 2 ou 3, dans lequel ladite unité de traitement d'adaptation (100) inclut des moyens (195) pour convertir un numéro d'identification de liaison d'une trame de signalisation.

5. Système de communication à large bande selon l'une quelconque des revendications 1 à 4, dans lequel lesdits moyens de commutation comportent une pluralité de moyens d'interface (10-1 à 10-j, 20-1 à 20-k) reliés chacun à l'une desdites lignes d'entrée, ligne autre que la ligne d'entrée (15A) de ladite paire prédéterminée, et ayant pour fonction de fournir à ladite cellule de signalisation lesdites informations de routage spécifiant la ligne de sortie (15B) de ladite paire prédéterminée.

6. Système de communication à large bande selon l'une quelconque des revendications 2 à 5, dans lequel ladite unité de traitement d'adaptation (100) inclut
des moyens (112) pour détecter des données de trames de signalisation,
des moyens (190A) pour répartir en données de cellules de longueur fixe les données des trames de signalisation,
des moyens (120, 121) pour mettre en file d'attente les données des cellules de longueur fixe,
des moyens (118) pour isoler des informations d'identification, et
des moyens (122) pour ajouter les informations d'identification aux données des cellules de longueur fixe, pour la transmission des données de cellules au commutateur à mode de transfert asynchrone (30) via la ligne d'entrée (15A) de ladite paire prédéterminée.

7. Système de communication à large bande selon l'une quelconque des revendications 2 à 5, dans lequel ladite unité de traitement d'adaptation (100) inclut
des moyens (112) pour détecter une série de trames de données, ainsi que la fin de la série de trames de données,
des moyens (120, 121) pour mémoriser les données de trames contenues dans la série des trames de données, et
des moyens (190A, 122) pour transmettre les données des cellules au commutateur à mode de transfert asynchrone (30), lors de la détection d'une série complète de trames de données, à travers la ligne d'entrée (15A) de ladite paire prédéterminée.

8. Système de communication à large bande selon l'une quelconque des revendications 2 à 7, dans lequel ladite unité de traitement d'adaptation (100) inclut
des moyens (124) pour recevoir une séquence de cellules de signalisation à partir du commutateur à mode de transfert asynchrone (30) via la ligne de sortie (15B) de ladite paire prédéterminée,
des moyens (128) pour séparer les informations d'identification et les données de cellule de chacune desdites cellules de signalisation reçues,
des moyens (BF-1 à BF-n) pour accumuler les données des cellules,
des moyens (190B) pour calculer des données d'identificateur de communication de liaison de données à partir des informations d'identification et à partir d'informations d'adresse acquises à partir desdits moyens de traitement de données (40) associés, et ajouter les données d'identificateur de communication de liaison de données aux données de cellules accumulées de manière à former des données de trames, et
des moyens (110B) pour communiquer les données de trames à ladite unité de traitement de trames de signalisation (101).

9. Système de communication à large bande selon la revendication 1, dans lequel ledit dispositif de signalisation comporte
un dispositif de signalisation de ligne d'abonné (1) relié audit commutateur à mode de transfert asynchrone (30) via une première paire (15) desdites lignes d'entrée et de sortie pour effectuer le traitement d'un protocole propre aux canaux de signalisation sur les cellules de signalisation transférées dans lesdits moyens de commutation via une ligne d'abonné (11) reliée à l'une desdites lignes d'entrée, et
un dispositif de signalisation de ligne interurbaine (2) relié audit commutateur à mode de transfert asynchrone (30) via une seconde paire (25) desdites lignes d'entrée et de sortie pour effectuer le traitement du protocole propre aux canaux de signalisation sur les cellules de signalisation transférées dans lesdits moyens de commutation via une ligne interurbaine (14) reliée à l'une desdites lignes d'entrée.

10. Procédé pour échanger des cellules de signalisation de longueur fixe, incluant des données de canal de signalisation, avec un dispositif de signalisation de ligne d'abonné (1) dans un système de communication à large bande, comportant les étapes consistant à :
appliquer en entrée des cellules de signalisation issues de lignes de transmission sur des moyens de commutation comportant un commutateur à mode de transfert asynchrone (30),
identifier si les cellules appliquées en entrée sont des cellules de signalisation et appliquer des informations de routage aux cellules de signalisation via lesdits moyens de commutation, lesdites informations de routage spécifiant une ligne de sortie (15B) dudit commutateur à mode de transfert asynchrone relié audit dispositif de signalisation de ligne d'abonné,
diriger les cellules de signalisation vers ladite ligne de sortie (15B) spécifiée via le commutateur à mode de transfert asynchrone conformément auxdites informations de routage appliquées,
délivrer les cellules de signalisation audit dispositif de signalisation de ligne d'abonné via la ligne de sortie (15B) spécifiée, et
réassembler les cellules de signalisation en données de trames de signalisation et traiter les données des trames de signalisation dans ledit dispositif de signalisation de ligne d'abonné,
dans lequel lesdites informations de routage incluent en outre un numéro de ligne (11, 14) sur laquelle la cellule est reçue par les moyens de commutation, et les cellules de signalisation sont identifiées dans ledit dispositif de signalisation de ligne d'abonné à partir dudit numéro de ligne et d'un numéro de canal virtuel afin de les réassembler sans mélanger les cellules de signalisation issues de lignes différentes (11, 14) utilisant le même numéro de canal virtuel.

11. Procédé selon la revendication 10, comportant les étapes consistant à
délivrer des données de trames audit dispositif de signalisation de ligne d'abonné à partir de moyens de traitement de données (40) associés pour effectuer le traitement d'un appel,
segmenter lesdites données de trames en une pluralité de blocs de données dans ledit dispositif de signalisation de ligne d'abonné,
ajouter des informations d'identification de cellule à chacun desdits blocs de données pour former une cellule de signalisation dans ledit dispositif de signalisation de ligne d'abonné, et
transférer la cellule de signalisation vers le commutateur à mode de transfert asynchrone à partir dudit dispositif de signalisation de ligne d'abonné via une ligne d'entrée (15A) spécifiée qui forme une paire avec ladite ligne de sortie (15B) spécifiée.

12. Procédé selon la revendication 11, comportant les étapes exécutées par ledit dispositif de signalisation de ligne d'abonné consistant à :
détecter une série de trames de données,
mémoriser les données des trames de la série des trames de données,
détecter la fin de la série des trames de données, et
transmettre les données des cellules au commutateur à mode de transfert asynchrone, lors de la détection d'une série complète de trames de données, via ladite ligne d'entrée (15A) spécifiée.
